# EUROPÄISCHE PATENTSCHRIFT

(11) **EP 0 598 677 B1**
(45) Veröffentlichungstag und Bekanntmachung des Hinweises auf die Patenterteilung: **23.10.1996**
(21) Anmeldenummer: 93810615.0
(22) Anmeldetag: 27.08.1993
(51) Int. Cl.: B41F 31/14, B41F 13/08, F16F 7/10, F16F 15/22

(54) **Einrichtung zur Vermeidung von Schwingungen in Druckmaschinen**
Installation for avoiding vibrations in printing machines
Installation pour éviter des vibrations dans des machines à imprimer

(30) Priorität: 05.10.1992 DE 4233460
(43) Veröffentlichungstag der Anmeldung: 25.05.1994
(73) Patentinhaber: Maschinenfabrik Wifag, CH-3001 Bern (CH)
(72) Erfinder: Miescher, Andreas, CH-3063 Ittigen (CH); Streit, Ernst, CH-3054 Schüpfen (CH)

(56) Entgegenhaltungen:
- EP-A- 0 066 114
- EP-A- 0 221 460
- AU-B- 522 179
- DE-A- 1 918 747
- DE-A- 2 322 638
- DE-A- 3 004 662
- DE-A- 3 540 837
- DE-B- 1 227 747
- DE-B- 1 301 670
- GB-A- Q9 976
- GB-A- 2 126 759
- P. KOESSLER; J. KRAUSS; G. SCHNADEL 'Fahrzeugtechnik, Bd. 3' 26. Juni 1972 , ROWOHLT , HAMBURG, DE Lueger Lexikon der Technik, Hsg. A. Ehrhardt und H. Franke * Seite 421, linke Spalte, Zeile 65 - rechte Spalte, Zeile 9 *

## Beschreibung

Die Erfindung betrifft eine Einrichtung zur Vermeidung von Schwingungen in Druckmaschinen, insbesondere Rollen-Rotationsdruckmaschinen.

Derartige Druckmaschinen, wie sie beispielsweise zum Bedrucken von Zeitungen benutzt werden, setzen sich aus mehreren Druckeinheiten zusammen. Eine Druckeinheit besteht beispielsweise aus vier Druckwerken, die satellitenförmig um einen gemeinsamen Gegendruckzylinder angeordnet sein können. Aus Platzgründen und zur Erreichung einer optimalen Bahnführung bei einer Vielfalt von möglichen Variationen der zu bedruckenden Zeitungen werden zwei der beschriebenen Druckeinheiten übereinander angeordnet. Dadurch entsteht ein Druckturm mit insgesamt acht Druckwerken, der eine grosse Höhe aufweist.

Der Aufbau eines Druckwerkes, wie sie in derartigen Drucktürmen eingesetzt werden, ist beispielsweise in der DE-A-40 12 283 beschrieben. Hierbei wird die Farbe von einer Farbzuführung über eine Anzahl Walzen auf eine zentrale Reibwalze gebracht, von wo zwei Auftragwalzen direkt, und indirekt über eine weitere Reibwalze, eingefärbt werden. Die Auftragwalzen tragen die Farbe auf den Plattenzylinder auf. Durch die Umsteuerbarkeit des Druckwerkes erfolgt die indirekte Uebertragung der Farbe von der zentralen Reibwalze über die weitere Reibwalze auf die entsprechende Auftragwalze über einen von zwei identischen Walzensträngen. Der andere Walzenstrang wird hierbei als Feuchtwerk verwendet.

Um den Farbfilm kompakt auf den Plattenzylinder übertragen zu können und zur Vermeidung von Streifenbildung werden die Reibwalzen zusätzlich zur Rotation in achsialer Richtung hin- und herbewegt. Der Antrieb dieses Achsialhubes erfolgt über Untersetzungsgetriebe vom Hauptantrieb der aus mehreren Druckeinheiten und Falzapparaten bestehenden Anlage aus.

Bei steigender Drehzahl der Anlage nähert sich die Hubfrequenz der Reibwalze der Eigenfrequenz der Druckeinheit bzw. des Druckturms.

Pro Farbwerk, wie es beispielsweise in der DE-A-40 12 283 dargestellt ist, sind für die Schaffung des auf den Plattenzylinder zu übertragenden Farbfilms zwei Reibwalzen erforderlich. Diese beiden Reibwalzen können hinsichtlich der Achsialhubbewegung wohl mit gleicher Hubfrequenz betrieben werden, müssen aber derart versetzt zueinander achsial hin- und herbewegt werden, dass die Hubumkehr und demzufolge der momentane Stillstand der einen Reibwalze nicht mit der anderen Reibwalze zusammenfällt. Vorzugsweise wird die Hubbewegung der beiden Reibwalzen um einen halben Hub versetzt.

Da beim genannten Druckwerk die beiden farbführenden Reibwalzen aus den genannten Gründen nicht genau entgegengesetzt hin- und herbewegt werden können, lassen sich die durch die bewegten Reibwalzenmassen entstehenden Kraftwirkungen auf das Druckmaschinengestell nicht kompensieren. Eine Kompensation lässt sich jedoch für eine der Reibwalzen im Farbwerk mit der Reibwalze im Feuchtwerk erreichen, da diese beiden Reibwalzen ohne weiteres achsial in entgegengesetzter Richtung bewegt werden können. Demzufolge verbleibt bei dem beispielhaften Druckwerk die Massenkraft einer achsial hin- und herbewegten Reibwalze, die vom Druckmaschinengestell aufgenommen werden muss.

Wenn nun zwei Druckeinheiten in Turmbauweise übereinander angeordnet sind, ergibt sich eine Erniedrigung der Eigenschwingungsfrequenz, die bis in die Grössenordnung der Hubfrequenz der Reibwalzen absinken kann. Die Reibwalzen wirken somit als Schwingungserreger, die einen entsprechenden Druckturm in Schwingung versetzen können, was sich im Hinblick auf die Druckqualität, welche von einer entsprechenden Anlage gefordert ist, nachteilig auswirken kann. Die Hubfrequenz der Reibwalzen können aus drucktechnischen Gründen nicht herabgesetzt werden, obwohl sich dadurch die Hubfrequenz der Reibwalzen aus dem Eigenfrequenzbereich der Druckeinheit bzw. des Druckturms entfernen würde.

Die Aufgabe der Erfindung besteht nun darin, eine Einrichtung zu schaffen, mit welcher die durch den Achsialhub der Reibwalzen entstehenden Schwingungen in Druckmaschinen vermieden werden können.

Erfindungsgemäss erfolgt die Lösung der Aufgabe durch die in Anspruch 1 angegebenen Merkmale.

Da die zu einer Druckeinheit zusammengefassten Druckwerke infolge der unterschiedlichsten Bahnführungsmöglichkeiten unabhängig voneinander in eine erforderliche Registerstellung gebracht werden müssen, ist es vorteilhaft, wenn jedem Druckwerk eine Ausgleichsmasse zugeordnet wird, welche der durch die achsiale Hin- und Herbewegung der Reibwalzen entstehenden Kraftwirkung auf das Druckwerkgestell entgegenwirkt. Hierbei ist es natürlich vorteilhaft, dass nur noch einer Reibwalze eine Ausgleichsmasse zugeordnet werden muss, da beispielsweise die zwei weiteren Reibwalzen in achsial entgegengesetzter Richtung hin- und herbewegbar sind, so dass die entstehenden Massenkräfte kompensiert werden.

Eine weitere vorteilhafte Ausführung der Erfindung besteht darin, dass die Ausgleichsmasse über einen Antrieb hin- und herbewegt wird, der aus einem rotierend antreibbaren Exzenterzapfen besteht, welcher in eine quer zur Bewegungsrichtung angeordnete Querführung eingreift, die mit der Ausgleichsmasse gekoppelt ist. Da die Achsialhubbewegung der Reibwalzen vorzugsweise ebenfalls durch einen rotierend antreibbaren Exzenterzapfen erfolgt, stimmen die Bewegungsabläufe der beiden Massen überein, so dass eine optimale Kompensation erreicht wird.

In vorteilhafter Weise ist die Reibwalze, welcher eine Ausgleichsmasse zugeordnet ist, als Hohlzylinder ausgebildet, so dass die Ausgleichsmasse im inneren Hohlraum der Reibwalze angeordnet werden kann. Hierbei ist es möglich, die in der Reibwalze angeordnete Ausgleichsmasse, welche achsial verschiebbar gelagert ist, mit der Reibwalze rotieren zu lassen. Eine andere Möglichkeit besteht darin, dass die Ausgleichsmasse, angeordnet in der Reibwalze, nicht zusammen mit der Reibwalze rotiert, sondern stillsteht.

Die achsiale Hubbewegung der in der Reibwalze angeordneten Ausgleichsmasse erfolgt in vorteilhafter Weise über eine Koppelstange, die fest mit der Ausgleichsmasse verbunden ist, und die durch eine koaxial angebrachte Bohrung durch einen Lagerzapfen der Reibwalze nach aussen geführt ist, so dass der Antrieb der Achsialhubbewegung der Ausgleichsmasse vom Druckmaschinengestell her erfolgen kann.

Eine andere Antriebsvariante zur Erzeugung einer Achsialhubbewegung der in der Reibwalze angeordneten Ausgleichsmasse besteht darin, dass durch eine koaxial angebrachte Bohrung in einem Lagerzapfen der Reibwalze eine mit dem Druckmaschinengestell fest verbundene Stange geführt ist, an deren Ende, welches in den Hohlraum der Reibwalze hineinragt, ein Kipphebel schwenkbar angelenkt ist, der mit einem Ende mit einer Koppelstange gelenkig verbunden ist, welche an der Innenseite der Reibwalze gelenkig befestigt ist, während das andere Ende des Kipphebels gelenkig über eine zweite Koppelstange mit der Ausgleichsmasse verbunden ist. Durch den Achsialhub der Reibwalze erfolgt über den Kipphebel eine Bewegungsumkehr, so dass die Ausgleichsmasse entgegengerichtet zur Hubbewegung der Reibwalze hin- und herbewegt wird. Diese konstruktive Gestaltung hat den Vorteil, dass sowohl die Reibwalze als auch die Ausgleichsmasse über den gleichen Antrieb in entgegengesetzter Richtung in Bewegung versetzt werden.

Anhand der beiliegenden Zeichnung werden beispielhafte Ausführungsvarianten der Erfindung nachfolgend näher erläutert. Es zeigen
- **Fig. 1**: schematisch die Anordnung der Walzen in einem Druckwerk einer Druckeinheit einer Druckmaschine;
- **Fig. 2a**: eine schematische Darstellung einer Reibwalze mit einer entsprechend zugeordneten Ausgleichsmasse in der einen Hubendlage,
- **Fig. 2b**: eine schematische Darstellung der Reibwalze mit entsprechender Ausgleichsmasse gemäss Fig. 2a in der anderen Hubendlage,
- **Fig. 3a**: einen Querschnitt durch eine Reibwalze mit einem Hohlraum mit darin angeordneter mitrotierender Ausgleichsmasse in der einen Hubendlage,
- **Fig. 3b**: eine Schnittdarstellung der Reibwalze gemäss Fig. 3a mit darin angeordneter Ausgleichsmasse in der anderen Hubendlage,
- **Fig. 4a**: eine Schnittdarstellung einer Reibwalze mit im Hohlraum angeordneter Ausgleichsmasse, welche rotativ bezüglich der Reibwalze stillsteht, in der einen Hubendlage,
- **Fig. 4b**: eine Schnittdarstellung der Reibwalze gemäss Fig. 4a mit darin angeordneter Ausgleichsmasse in der anderen Hubendlage,
- **Fig. 5**: eine Schnittdarstellung einer Reibwalze mit im Hohlraum angeordneter Ausgleichsmasse, deren Hubbewegungsantrieb über die Hubbewegung der Reibwalze erfolgt.

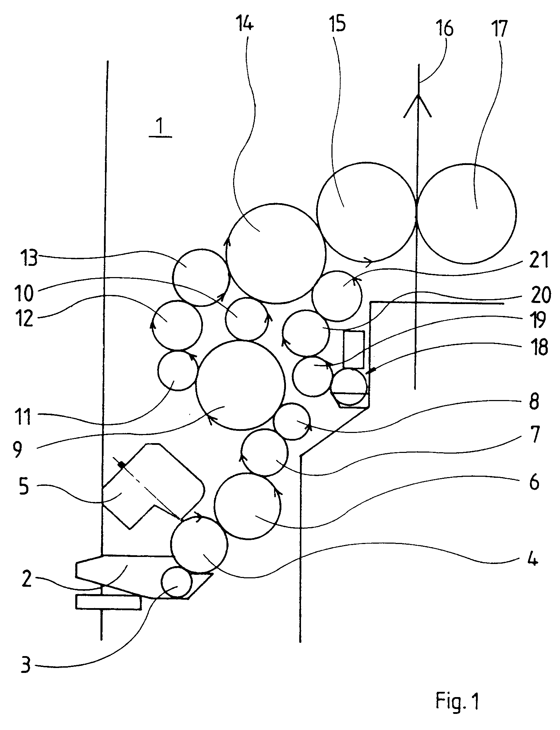

In einem bekannten Druckwerk 1, dessen Walzenanordnung in Fig. 1 schematisch dargestellt ist, wird die Farbe aus einer Farbwanne 2 durch eine Schöpfwalze 3 auf den Farbduktor 4 übertragen, auf welchem die Farbe über ein im Farbmesserbalken 5 angeordnetes Farbmesser dosiert wird. Von da gelangt der Farbfilm über weitere Uebertragungswalzen 6, 7 und 8 auf eine zentrale Reibwalze 9. Von dieser Reibwalze 9 aus wird einerseits eine erste Auftragwalze 10 eingefärbt, während andererseits über eine weitere Uebertragungswalze 11 eine weitere Reibwalze 12 und eine zweite Auftragwalze 13 mit Farbe versorgt werden, wonach die Auftragwalzen 10 und 13 den Plattenzylinder 14 einfärben, welcher das Druckbild auf den Gummituchzylinder 15 überträgt, von welchem das Bedrucken der Papierbahn 16 erfolgt, unter Zuhilfenahme eines Gegendruckzylinders 17.

Zur Einfeuchtung des Plattenzylinders 14 dient ein Feuchtwerk 18, von welchem das Feuchtmittel über eine Uebertragungswalze 19 einer Reibwalze 20 zugeführt wird, von wo es über eine Auftragswalze 21 auf den Plattenzylinder 14 gelangt.

Um bei der Schaffung des Farbfilms und des Feuchtmittelfilms eine Streifenbildung zu vermeiden, sind die genannten Reibwalzen vorgesehen, die neben der Rotationsbewegung zusätzlich noch axial hin- und herbewegbar sind. Diese Hubfrequenzen bewirken durch die hin- und herbewegten Massen der Reibwalzen Massenkräfte, die vom Druckmaschinengestell aufgenommen werden müssen. Durch die hohe Bauweise der genannten Druckmaschinen bewegt man sich mit diesen Hubfrequenzen bei maximaler Maschinendrehzahl und bei grossformatigen Druckprodukten bereits im Bereich der Eigenschwingungsfrequenz eines entsprechenden Druckturmes.

Beim Druckwerk, wie es in Fig. 1 dargestellt ist, können die beiden Reibwalzen 12 und 20 eine genau gegenläufige Hubfrequenz aufweisen, da je eine dieser beiden Reibwalzen 12 bzw. 20 der Feuchtmittelübertragung bzw. der Farbübertragung dient. Durch die gegenläufige Achsialhubbewegung werden die von diesen beiden Reibwalzen herrührenden Massenkräfte, die auf das Druckmaschinengestell wirken, kompensiert. Demzufolge muss für dieses Druckwerk nur noch die Massenkraft, die von der Achsialhubbewegung der Reibwalze 9 herrührt, kompensiert werden.

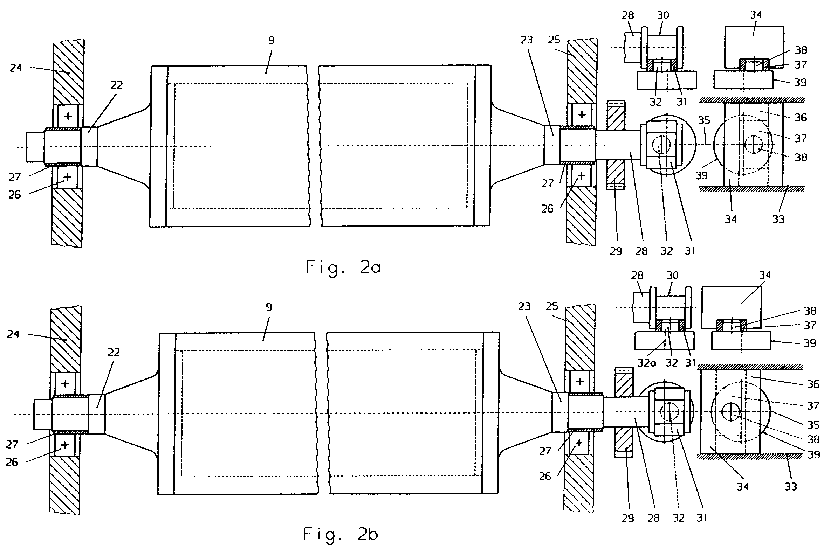

Fig. 2a und 2b zeigen die Lagerung einer der Reibwalzen, beispielsweise der Reibwalze 9. Es könnte sich aber um jede beliebige Reibwalze, beispielsweise die Reibwalzen 12 oder 20, die in einem Druckwerk angeordnet sind, handeln. Die Reibwalze 9 ist beidseits mit einem koaxial angeordneten Achsstück 22 bzw. 23 ausgerüstet. Mit diesen beiden Achsstücken 22 und 23 ist die Reibwalze 9 in den Druckwerkswänden 24 bzw. 25 gelagert. Beide Lagerungen bestehen aus einem Radiallager 26 und einem Achsiallager 27.

Auf der Antriebseite weist das Achsstück 23 der Reibwalze 9 eine Verlängerung 28 auf, welche an der Aussenseite der Druckwerkswand 25 vorsteht. Auf die Verlängerung 28 aufgesetzt und mit der Verlängerung 28 drehfest verbunden ist ein Zahnrad 29, über welches die Reibwalze 9 in bekannter Weise vom Maschinenantrieb aus rotativ antreibbar ist.

In die Verlängerung 28 eingearbeitet ist eine umlaufende Nut 30, in welche ein Gleitstein 31 eingreift, welcher auf einem Exzenterzapfen 32 gelagert ist. Der Exzenterzapfen 32 ist in bekannter Weise um die Achse 32a drehbar, angetrieben vom Maschinenantrieb aus, wodurch die Reibwalze 9, geführt durch die Achsiallager 27, hin- und herbewegt werden kann.

Auf der Antriebseite des Druckwerkes 1 und im Bereich der Reibwalzenlagerung sind am Maschinengestell in nicht dargestellter Weise Führungen 33 befestigt, in welchen eine Ausgleichsmasse 34 entlang einer Geraden 35 hin- und herbewegbar ist. Die Ausgleichsmasse 34 ist mit einer quer zur Geraden 35 ausgerichteten Nut 36 versehen, in welcher ein Gleitstein 37 gleitend geführt ist und in welchen ein Exzenterzapfen 38 eines Exzenterantriebes 39 eingreift. Der Exzenterantrieb 39 bewirkt ein Hin- und Herbewegen der Ausgleichsmasse 34 entlang der Geraden 35, welche parallel zur Reibwalzenachse ausgerichtet ist. Hierbei erfolgt die Bewegung der Ausgleichsmasse 34 gegenläufig zur Achsialhubbewegung der Reibwalze 9. Dabei ist der Hub der Ausgleichsmasse 34 doppelt so gross wie der Hub der Reibwalze 9, während das Gewicht der Ausgleichsmasse 34 der Hälfte des Gewichtes der Reibwalze 9 entspricht.

Die Anordnung der Ausgleichsmasse 34 mit den entsprechenden Führungen 33 muss nicht so sein, wie in Fig. 2a und 2b dargestellt ist, dass die Gerade 35, entlang welcher die Ausgleichsmasse 34 hin- und herbewegt wird, mit der Achse der Reibwalze 9 zusammenfällt. Die Anordnung der Ausgleichsmasse 34 kann irgendwo an der Druckwerkswand 25 erfolgen.

Während die Fig. 2a die Reibwalze 9 und die Ausgleichsmasse 34 in der einen Hubendlage ihrer Bewegungen darstellt, zeigt Fig. 2b die Reibwalze 9 und die Ausgleichsmasse 34 in der anderen Hubendlage.

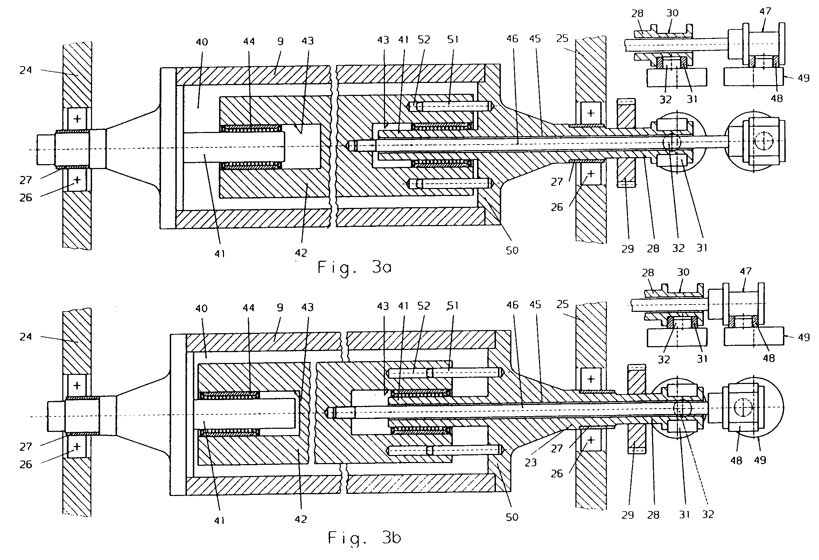

Fig. 3a und 3b zeigen einen Längsschnitt durch eine Reibwalze, im vorliegenden Beispiel durch die Reibwalze 9. Diese Reibwalze 9 ist in gleicher Art in den Druckwerkswänden 24 und 25 durch Radiallager 26 und Achsiallager 27 drehbar und verschiebbar gelagert. Wie in Fig. 2a und 2b beschrieben, erfolgt der Drehantrieb dieser Reibwalze 9 über das Zahnrad 29, während die Achsialhubbewegung über Exzenterzapfen 32 und Gleitstein 31 erfolgt, der in der umlaufenden Nut 30 der Achsverlängerung 28 der Reibwalze 9 gleitend geführt ist. Die Reibwalze 9 ist hohlzylinderförmig ausgebildet und weist demzufolge einen inneren Hohlraum 40 auf. In diesem Hohlraum 40 sind Führungen 41 angeordnet, deren Führungsflächen koaxial zur Längsachse der Reibwalze 9 ausgerichtet sind. Mit diesen Führungen 41 ist eine Ausgleichsmasse 42 geführt, so dass diese eine Hin- und Herbewegung in Längsachsenrichtung der Reibwalze ausführen kann. Dazu sind zwischen den Führungen 41 und den entsprechend geformten Lagerflächen 43 der Ausgleichsmasse 42 Achsiallager 44 vorgesehen.

Durch die Verlängerung 28 und das Achsstück 23 bis in den Hohlraum 40 der Reibwalze ist koaxial zur Längsachse der Reibwalze 9 eine durchgehende Bohrung 45 angebracht. Durch diese Bohrung 45 ist eine Koppelstange 46 geführt, die an ihrem einen Ende mit der Ausgleichsmasse 42 fest verbunden ist. Das andere Ende der Koppelstange 46, welches über die Verlängerung 28 hinausragt, ist mit einer umlaufenden Nut 47 versehen, welche als Führung für einen Gleitstein 48 dient, der über einen Exzenterantrieb 49 eine Hin- und Herbewegung der Koppelstange 46 bewirkt. Dieser Antrieb erfolgt im Takt mit der Achsialhubbewegung der Reibwalze 9, jedoch entgegengesetzt. Dabei ist der Achsialhub der Ausgleichsmasse 42 doppelt so gross wie derjenigen der Reibwalze 9, während das Gewicht der Ausgleichsmasse 42 halb so gross ist, wie dasjenige der Reibwalze 9.

In diesem Ausführungsbeispiel folgt die Ausgleichsmasse 42 der Rotationsbewegung der Reibwalze 9. Hierzu sind in einer Stirnwand 50 der Reibwalze 9 über den Umfang verteilt Stifte 51 eingesetzt, deren Längsachsen parallel zur Achsialhubbewegung der Ausgleichsmasse 42 ausgerichtet sind, und die in entsprechend geformte Oeffnungen 52 der Ausgleichsmasse 42 hineinragen. Ein Mitdrehen der Ausgleichsmasse 42 mit der Reibwalze 9 hat den Vorteil, dass zwischen den Führungen 41 und der Ausgleichsmasse 42 nur eine Längsbewegung auftritt.

In Fig. 3a ist die Reibwalze und die Ausgleichsmasse in ihrer einen Hubendlage gezeigt, während in Fig. 3b die Reibwalze und die Ausgleichsmasse in der anderen Hubendlage dargestellt ist.

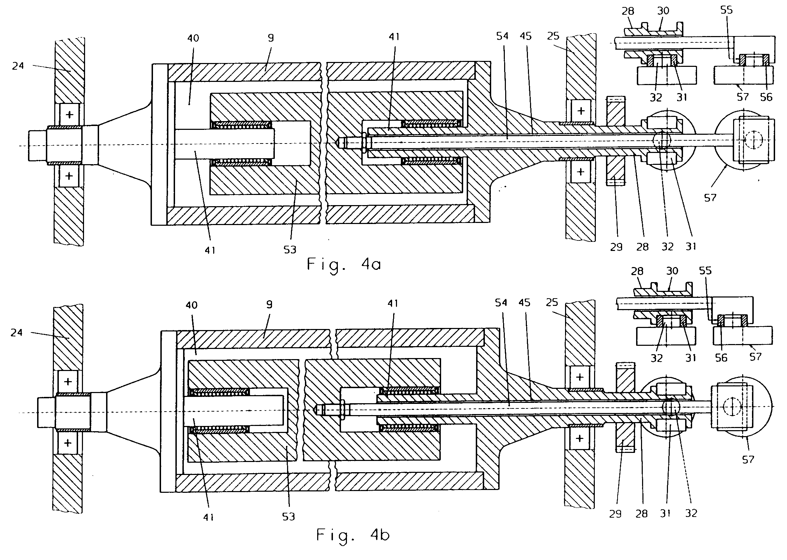

Fig. 4a und 4b zeigen ein weiteres erfindungsgemässes Ausführungsbeispiel, bei welchem die Reibwalze 9 der Ausführung entspricht, wie sie in Fig. 3a und 3b dargestellt ist. Die Lagerung, der Antrieb der Rotation sowie der Antrieb des Achsialhubes entsprechen der Ausführung gemäss Fig. 3a und 3b, so dass auf deren Beschreibung verzichtet werden kann. Die Ausgleichsmasse 53 ist ebenfalls im Hohlraum 40 der Reibwalze 9 auf Führungen 41 drehbar und achsial verschiebbar gelagert. Die Ausgleichsmasse 53 ist fest mit einer Koppelstange 54 verbunden, welche durch die Bohrung 45 geführt ist und über die Verlängerung 28 hinausragt. Im Gegensatz zum in Fig. 3a und 3b dargestellten Beispiel ist die Ausgleichsmasse 53 bezüglich der Rotation der Reibwalze 9 stillstehend. Daher steht auch die Koppelstange 54 entsprechend still, was durch eine nicht dargstellte, bekannte Verdrehsicherung erreicht wird. Demzufolge ist das Ende der Koppelstange 54 lediglich mit einer quer zur Längsachse verlaufenden Nut 55 versehen, in welcher ein Gleitstein 56 geführt ist, so dass über einen Exzenterantrieb 57 die Ausgleichsmasse 53 hin- und herbewegbar ist. Die Bewegung der Ausgleichsmasse 53 erfolgt im Takt mit dem Achsialhub der Reibwalze 9, jedoch in entgegengesetzter Richtung. Auch bei diesem Beispiel ist der Achsialhub der Ausgleichsmasse 53 doppelt so gross wie der Achsialhub der Reibwalze 9, während das Gewicht der Ausgleichsmasse 53 dem halben Gewicht der Reibwalze 9 entspricht.

In Fig. 4a ist die Reibwalze 9 und die Ausgleichsmasse 53 in der einen Hubendlage dargestellt, während Fig. 4b die Reibwalze 9 und die Ausgleichsmasse 53 in der anderen Hubendlage zeigt.

Mit der bezüglich der Reibwalze 9 rotativ stillstehenden Ausgleichsmasse 53 wird der Vorteil erreicht, dass beim Anfahren der gesamten Druckanlage weniger Masse beschleunigt werden muss.

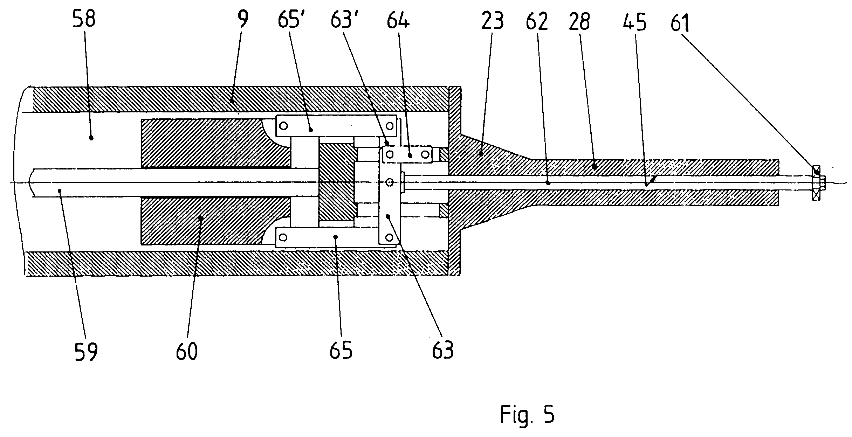

Gemäss dem Ausführungsbeispiel, wie es in Fig. 5 vereinfacht dargestellt ist, wird die Reibwalze 9 wie vorgängig beschrieben rotativ angetrieben und achsial hin- und herbewegt. Im Hohlraum 58 der Reibwalze 9 ist koaxial zur Längsachse der Reibwalze 9 eine Führung 59 angeordnet. Auf der Führung 59 ist die Ausgleichsmasse 60 hin- und herbewegbar geführt. Koaxial im Achsstück 23 und in der Verlängerung 28 ist die durchgehende Bohrung 45 angebracht. Durch diese Bohrung 45 ist eine Stange 62 geführt, deren aussenseitiges Ende ortsfest und verdrehbar mit dem Maschinengestell verbunden ist, was durch die schematische Darstellung des Lagers 61 angedeutet ist. Am in den Hohlraum 58 der Reibwalze 9 hineinreichenden Ende der Stange 62 ist ein Kipphebel 63 schwenkbar angelenkt, dessen eines Ende mit einer ersten Koppelstange 64 gelenkig verbunden ist, die mit ihrem anderen Ende an der Innenseite der Reibwalze 9 gelenkig befestigt ist.

Das andere Ende des Kipphebels 63 ist über eine zweite Koppelstange 65 mit der Ausgleichsmasse 60 gelenkig verbunden. Parallel zum Kipphebel 63 kann ein zweiter Kipphebel 63' vorgesehen sein, welcher über die Koppelstange 65' mit der Ausgleichsmasse 60 verbunden ist. Das andere Ende des Kipphebels 63' ist ebenfalls über eine nicht dargestellte Koppelstange, die der Koppelstange 64 entspricht, mit der Reibwalze 9 gelenkig verbunden.

Wenn die Reibwalze 9 hin- und herbewegt wird, bewirkt die Koppelstange 64 ein Verschwenken des Kipphebels 63, wodurch die Ausgleichsmasse 60 über die Koppelstange 65 in entgegengesetzter Richtung hin- und herbewegt wird.

Mit dieser Ausführungsform wird durch den Exzenterantrieb, der die Reibwalze hin- und herbewegt, gleichzeitig auch die Ausgleichsmasse 60 in entgegengesetzter Richtung hin- und herbewegt.

Mit derartigen Ausgleichsmassen können Schwingungen, insbesondere in Drucktürmen, die durch die Hin- und Herbewegung der Reibwalzen entstehen, vermieden werden, was sich positiv auf die Druckqualität auswirkt.

## Patentansprüche

1. Einrichtung zur Vermeidung von Schwingungen in Druckmaschinen, insbesondere Rollen-Rotationsdruckmaschinen, zum Bedrucken von bahnförmigen Materialien, mit mindestens einem in einem Maschinengestell angeordneten Druckwerk (1), bestehend aus mindestens einem Farbwerk, Plattenzylinder (14), Gummituchzylinder (15) und/oder Gegendruckzylinder, und unter Umständen einem Feuchtwerk, welche Schwingungen von den achsialen Hubbewegungen der Reibwalzen (9, 12, 20) im Farbwerk und/oder Feuchtwerk herrühren, wobei mindestens eine Ausgleichsmasse (34; 42; 53; 60) im Druckwerk (1) bewegbar gelagert ist, und die Bewegung der Ausgleichsmasse (34; 42; 53; 60) über eine Antriebseinrichtung (39; 49; 57) erfolgt, welche die Ausgleichsmasse (34; 42; 53; 60) im Takt zum Achsialhub der Reibwalzen (9; 12; 20), jedoch in entgegengesetzter Richtung zur resultierenden Massenkraftwirkung der Achsialhubbewegungen der Reibwalzen (9; 12; 20), oszillierend bewegt.

2. Einrichtung nach Anspruch 1, dadurch gekennzeichnet, dass die Ausgleichsmasse (34; 42; 53; 60) entlang von Führungen (33; 41; 59) hin- und herbewegbar ist, welche Führungen im wesentlichen parallel zu den Achsen der Reibwalzen (9; 12; 20) gerade ausgebildet sind.

3. Einrichtung nach Anspruch 2, dadurch gekennzeichnet, dass die Gerade (35), entlang welcher die Ausgleichsmasse (34; 42; 53; 60) hin- und herbewegbar ist, in die Achse einer Reibwalze (9; 12; 20) zu liegen kommt.

4. Einrichtung nach einem der Ansprüche 1 bis 3, dadurch gekennzeichnet, dass jeder Reibwalze (9; 12; 20) eines Druckwerkes (1), deren durch die Achsialhubbewegung entstehende Massenkraftwirkung nicht durch eine zweite, entgegengesetzt bewegte Reibwalze kompensierbar ist, eine Ausgleichsmasse zugeordnet ist.

5. Einrichtung nach Anspruch 4, dadurch gekennzeichnet, dass die Ausgleichsmasse (34; 42; 53) in Führungen (33; 41) verschiebbar geführt ist, welche Führungen (33; 41) parallel zur Längsachse der Reibwalze (9; 12; 20) verlaufen, dass die Ausgleichsmasse (34; 42; 53) über einen Antrieb (39; 49; 57) entgegen der Achsialhubbewegung der Reibwalze (9; 12; 20) hin- und herbewegbar ist.

6. Einrichtung nach Anspruch 5, dadurch gekennzeichnet, dass der Antrieb (39; 49; 57) aus einem rotierend antreibbaren Exzenterzapfen besteht, der in eine quer zu den Führungen (33; 41) angeordnete Querführung (36; 47; 55), die mit der Ausgleichsmasse (34; 42; 53) gekoppelt ist, eingreift und die Ausgleichsmasse (34; 42; 53) hin- und herbewegt.

7. Einrichtung nach Anspruch 5 oder 6, dadurch gekennzeichnet, dass die Führungen (33) am Maschinengestell ausserhalb der Reibwalzenlagerung angeordnet sind.

8. Einrichtung nach Anspruch 5 oder 6, dadurch gekennzeichnet, dass die Reibwalze (9) hohlzylinderförmig ausgebildet ist und dass die Führungen (41; 59) und die Ausgleichsmasse (42; 53; 60) im inneren Hohlraum (40; 58) der Reibwalze (9) angeordnet sind.

9. Einrichtung nach Anspruch 8, dadurch gekennzeichnet, dass die Führungen (41) für die Ausgleichsmasse (42; 53) aus mindestens einem zylinderförmigen Achsstück bestehen, welches koaxial zur Reibwalzenachse im Hohlraum (40) der Reibwalze (9) angebracht ist, dass die Ausgleichsmasse (42; 53) mit mindestens einer zentralen Oeffnung versehen ist, in welche das Achsstück eingreift, wobei zwischen dem Achsstück und der Ausgleichsmasse (42; 53) ein Lager vorgesehen ist, dass mit der Ausgleichsmasse (42; 53) eine koaxial zur Reibwalze (9) angeordnete Koppelstange (46; 54) fest verbunden ist, die durch eine Bohrung (45) eines Lagerzapfens der Reibwalze (9) längsverschiebbar geführt ist und mit dem ausserhalb der Reibwalze (9) im Maschinengestell angeordneten Antrieb (49; 57) verbunden ist.

10. Einrichtung nach Anspruch 9, dadurch gekennzeichnet, dass die Reibwalze in ihrem inneren Hohlraum (40) mit parallel zur Längsachse ausgerichteten Mitnehmerstiften (51) ausgestattet ist, welche in entsprechende Bohrungen (52) der Ausgleichsmasse (42) eingreifen und somit die Rotationsbewegung der Reibwalze (9) auf die Ausgleichsmasse (42) übertragen.

11. Einrichtung nach Anspruch 5, dadurch gekennzeichnet, dass der Antrieb der Hubbewegung der Ausgleichsmasse (60), welche im inneren Hohlraum (58) der Reibwalze (9) achsial verschiebbar gelagert ist, über eine Stange (62) erfolgt, welche durch eine koaxiale Oeffnung (45) eines Lagerzapfens der Reibwalze (9) geführt ist und aussenseitig mit dem Maschinengestell verschiebefest verbunden ist, dass am in die Reibwalze (9) hineinreichenden Ende der Stange (62) ein Kipphebel (63) schwenkbar angelenkt ist, dessen eines Ende mit einer ersten Koppelstange (64) gelenkig verbunden ist, deren anderes Ende an der Innenseite der Reibwalze (9) gelenkig befestigt ist, während das andere Ende des Kipphebels (63) über eine zweite Koppelstange (65) mit der Ausgleichsmasse (60) gelenkig verbunden ist.

12. Einrichtung nach einem der Ansprüche 1 bis 11, dadurch gekennzeichnet, dass das Produkt aus Ausgleichsmasse und deren Verschiebeweg dem Produkt aus Reibwalzenmasse und deren Verschiebeweg entspricht.

## Claims

1. Device for avoiding vibrations in printing machines, in particular web-fed rotary printing machines, for printing materials in web form, having at least one printing group (1) arranged in a machine frame, comprising at least one inking system, plate cylinder (14), blanket cylinder (15) and/or impression cylinder, and possibly a damping system, which vibrations originate from the axial stroke movements of the distributor rollers (9, 12, 20) in the inking system and/or damping system, at least one balancing mass (34; 42; 53; 60) being movably mounted in the printing group (1), and the movement of the balancing mass (34; 42; 53; 60) being effected via a drive device (39; 49; 57) which oscillatingly moves the balancing mass (34; 42; 53; 60) in step with the axial stroke of the distributor rollers (9; 12; 20), but in the opposite direction to the resultant inertia force action of the axial-stroke movements of the distributor rollers (9; 12; 20).

2. Device according to Claim 1, characterised in that the balancing mass (34; 42; 53; 60) is movable to and fro along guides (33; 41; 59), which guides are designed straight and substantially parallel to the axes of the distributor rollers (9; 12; 20).

3. Device according to Claim 2, characterised in that the straight line (35), along which the balancing mass (34; 42; 53; 60) is movable to and fro, comes to lie on the axis of a distributor roller (9; 12; 20).

4. Device according to one of Claims 1 to 3, characterised in that each distributor roller (9; 12; 20) of a printing group (1), of which distributor roller the inertia force action resulting from the axial-stroke movement is not able to be balanced by a second, oppositely moved distributor roller, is assigned a balancing mass.

5. Device according to Claim 4, characterised in that the balancing mass (34; 42; 53) is displaceably guided in guides (33; 41), which guides (33; 41) run parallel to the longitudinal axis of the distributor roller (9; 12; 20), in that the balancing mass (34; 42; 53) is movable to and fro counter to the axial-stroke movement of the distributor roller (9; 12; 20) via a drive (39; 49; 57).

6. Device according to Claim 5, characterized in that the drive (39; 49; 57) comprises a rotationally drivable eccentric stud which engages in a transverse guide (36; 47; 55), arranged transversely to the guides (33; 41) and coupled to the balancing mass (34; 42; 53), and moves the balancing mass (34; 42; 53) to and fro.

7. Device according to Claim 5 or 6, characterised in that the guides (33) are arranged on the machine frame outside the distributor-roller bearing arrangement.

8. Device according to Claim 5 or 6, characterised in that the distributor roller (9) is designed in the form of a hollow cylinder and in that the guides (41; 59) and the balancing mass (42; 53; 60) are arranged in the inner hollow space (40; 58) of the distributor roller (9).

9. Device according to Claim 8, characterized in that the guides (41) for the balancing mass (42; 53) comprise at least one cylindrical axle piece, which is made coaxially with the axis of the distributor roller in the hollow space (40) of the distributor roller (9), in that the balancing mass (42; 53) is provided with at least one central opening, in which the axle piece engages, a bearing being provided between the axle piece and the balancing mass (42; 53), in that a connecting rod (46; 54) arranged coaxially with the distributor roller (9) is fixedly connected to the balancing mass (42; 53), is longitudinally displaceably guided through a bore (45) in a bearing journal of the distributor roller (9) and is connected to the drive (49; 57) arranged outside the distributor roller (9) in the machine frame.

10. Device according to Claim 9, characterised in that the distributor roller is equipped in its inner hollow space (40) with carrier pins (51) which are oriented parallel to the longitudinal axis, engage in corresponding bores (52) in the balancing mass (42) and thus transmit the rotary movement of the distributor roller (9) to the balancing mass (42).

11. Device according to Claim 5, characterised in that the drive for the stroke movement of the balancing mass (60) which is axially displaceably mounted in the inner hollow space (58) of the distributor roller (9) is provided via a rod (62) which is led through a coaxial opening (45) in a bearing journal of the distributor roller (9) and is externally connected to the machine frame in such a way as to be fixed against displacement, in that to the end of the rod (62) reaching into the distributor roller (9) there is pivotably articulated a tilting lever (63), one end of which is articulatedly connected to a first connecting rod (64), the other end of which is articulatedly connected to the inner surface of the distributor roller (9), while the other end of the tilting lever (63) is articulatedly connected to the balancing mass (60) via a second connecting rod (65).

12. Device according to one of Claims 1 to 11, characterised in that the product of balancing mass and its displacement travel corresponds to the product of distributor-roller mass and its displacement travel.

## Revendications

1. Installation pour éviter des vibrations dans des machines à imprimer, en particulier des machines à imprimer rotatives à rouleaux, pour imprimer des matériaux se présentant sous forme de bande, comportant au moins un groupe d'impression (1) disposé dans un bâti de machine et constitué d'au moins un groupe encreur, de cylindres porte-cliché (14), de cylindres porte-blanchet (15) et/ou de cylindres à contre-pression, et, selon les cas, d'un groupe humidificateur, les vibrations provenant des mouvements de débattement axiaux des rouleaux broyeurs (9, 12, 20) dans le groupe encreur et/ou le groupe humidificateur, au moins une masse d'équilibrage (34; 42; 53; 60) étant montée déplaçable dans le groupe d'impression (1) et le déplacement de la masse d'équilibrage (34; 42; 53; 60) s'effectuant par l'intermédiaire d'un dispositif d'entraînement (39; 49; 57) qui met en oscillation la masse d'équilibrage (34; 42; 53; 60), à la cadence du mouvement de débattement axial des rouleaux broyeurs (9; 12; 20), cependant dans le sens inverse de l'effet résultant de la force due aux masses, vis à vis des de débattementde débattement axial des rouleaux broyeurs (9; 12; 20).

2. Dispositif selon la revendication 1, caractérisé en ce que la masse d'équilibrage (34; 42; 53; 60) est déplaçable dans un sens et dans l'autre le long de guidages (33; 41; 59), ces guidages étant de réalisation rectiligne et sensiblement parallèlement aux axes des rouleaux broyeurs (9; 12; 20).

3. Dispositif selon la revendication 2, caractérisé en ce que la droite (35) selon laquelle la masse d'équilibrage (34; 42; 53; 60) est déplaçable dans un sens et dans l'autre vient se placer dans l'axe d'un rouleau broyeur (9; 12; 20).

4. Dispositif selon l'une des revendications 1 à 3, caractérisé en ce qu'une masse d'équilibrage est associée à chaque rouleau broyeur (9; 12; 20) d'un groupe d'impression (1), dont l'effet dû aux masses est produit par le déplacement de débattement axial ne peut être compensé au moyen d'un deuxième rouleau broyeur se déplaçant en sens opposé.

5. Dispositif selon la revendication 4, caractérisé en ce que la masse d'équilibrage (34; 42; 53) est guidée de façon à pouvoir se déplacer dans des guidages (33; 41), ces guidages (33; 41) courant parallèlement à l'axe longitudinal du rouleau broyeur (9; 12; 20), de manière que la masse d'équilibrage (34; 42; 53) soit déplaçable dans un sens et dans l'autre, par l'intermédiaire d'un entraînement (39; 49; 57), dans le sens inverse de celui du mouvement de débattement axial du rouleau broyeur (9; 12; 20).

6. Dispositif selon la revendication 5, caractérisé en ce que l'entraînement (39; 49; 57) est constitué d'un tourillon excentrique, pouvant être entraîné en rotation et s'engageant dans un guidage transversal (36; 47; 55), disposé transversalement par rapport aux guidages (33; 41) et couplé à la masse d'équilibrage (34; 42; 53) et déplaçant dans un sens et dans l'autre la masse d'équilibrage (34; 42; 53).

7. Dispositif selon la revendication 5 ou 6, caractérisé en ce que les guidages (33) sont disposés sur le bâti de machine, à l'extérieur du montage de tourillonnement des rouleaux broyeurs.

8. Dispositif selon la revendication 5 ou 6, caractérisé en ce que le rouleau broyeur (9) est réalisé sous forme d'un cylindre creux et en ce que les guidages (41; 59) et la masse d'équilibrage (42; 53; 60) sont disposés dans l'espace creux intérieur (40; 58) du rouleau broyeur (9).

9. Dispositif selon la revendication 8, caractérisé en ce que les guidages (41) destinés à la masse d'équilibrage (42; 53) sont constitués d'au moins un élément axial de forme cylindrique qui est monté coaxialement par rapport à l'axe du rouleau broyeur, dans l'espace creux (40) du rouleau broyeur (9), en ce que la masse d'équilibrage (42; 53) est pourvue au moins d'une ouverture centrale dans laquelle s'engage l'élément axial, un palier étant prévu entre l'élément axial et la masse d'équilibrage (42; 53), en ce qu'une tige de couplage (46; 54) disposée coaxialement par rapport au rouleau broyeur (9) est reliée rigidement à la masse d'équilibrage (42; 53) et guidée de façon déplaçable longitudinalement à travers un perçage (45) d'un tourillon de palier du rouleau broyeur (9) et reliée à l'entraînement (49; 57) disposé dans le bâti de machine, à l'extérieur du rouleau broyeur (9).

10. Dispositif selon la revendication 9, caractérisé en ce que le rouleau broyeur est équipé dans son espace creux intérieur (40) de tétons d'entraînement (51), orientés parallèlement par rapport à l'axe longitudinal et s'engageant dans des perçages (52) correspondants de la masse d'équilibrage (42) et transmettant ainsi le mouvement de rotation du rouleau broyeur (9) à la masse d'équilibrage (42).

11. Dispositif selon la revendication 5, caractérisé en ce que l'entraînement du mouvement de débattement de la masse d'équilibrage (60), qui est montée déplaçable axialement dans l'espace creux intérieur (58) du rouleau broyeur (9) s'effectue par l'intermédiaire d'une tige (62) guidée au moyen d'une ouverture coaxiale (45) d'un tourillon de palier du rouleau broyeur (9) et reliée en empêchant tout coulissement, extérieurement, au bâti machine, en ce que sur l'extrémité, pénétrant dans le rouleau broyeur (9), de la tige (62) est articulé à pivotement un levier basculant (63) dont une extrémité est reliée de façon articulée à une première tige de couplage (64), dont l'autre extrémité est fixée de façon articulée en face intérieure du rouleau broyeur (9), tandis que l'autre extrémité du levier basculant (63) est reliée de façon articulée à la masse d'équilibrage (60), par l'intermédiaire d'une deuxième tige de couplage (65).

12. Dispositif selon l'une des revendications 1 à 11, caractérisé en ce que le produit de la masse d'équilibrage et de sa course de débattement correspond au produit de la masse du rouleau broyeur et de sa course de débattement.
